# EUROPÄISCHE PATENTSCHRIFT

(11) **EP 1 244 818 B1**
(45) Veröffentlichungstag und Bekanntmachung des Hinweises auf die Patenterteilung: **04.02.2004**
(21) Anmeldenummer: 00962535.1
(22) Anmeldetag: 26.09.2000
(51) Int. Cl.: C22B 5/12, C21B 13/00, C21B 13/14

(54) **VERFAHREN UND ANLAGE ZUR REDUKTION VON FEINERZEN IN EINEM MEHRSTUFIGEN SCHWEBEGASSTROM MIT ZYKLONABSCHEIDER**
METHOD AND INSTALLATION FOR REDUCING ORE FINES IN A MULTI-STAGE SUSPENSION GAS STREAM USING A CYCLONE SEPARATOR
PROCEDE ET INSTALLATION POUR REDUIRE DES FINES DE MINERAI DANS UN DISPOSITIF DE PRECHAUFFAGE PAR MISE EN SUSPENSION DANS UN GAZ, A PLUSIEURS ETAGES, AU MOYEN D'UN CYCLONE DEPOUSSIEREUR

(30) Priorität: 15.12.1999 DE 19960575
(43) Veröffentlichungstag der Anmeldung: 02.10.2002
(73) Patentinhaber: Polysius AG, 59269 Beckum (DE)
(72) Erfinder: PATZELT, Norbert, 59269 Beckum (DE); KLONUS, Jürgen, 59329 Diestedde (DE); MENZEL, Dietrich, 59269 Beckum (DE)
(74) Vertreter: Tetzner, Michael, Dipl.-Ing.
(86) Internationale Anmeldenummer: PCT/EP2000/009418
(87) Internationale Veröffentlichungsnummer: WO 2001/044522

(56) Entgegenhaltungen:
- EP-A- 0 012 363
- DE-A- 2 428 715
- DE-B- 1 160 462
- DE-B- 1 261 138
- US-A- 4 179 284
- US-A- 4 207 093

## Beschreibung

Die Erfindung betrifft ein Verfahren (entsprechend dem Oberbegriff des Anspruches 1) und eine Anlage (gemäß dem Oberbegriff des Anspruches 10) zur Reduktion von Feinerzen.

Es ist allgemein bekannt, dass Feinerze, z.B. Eisen-, Nickel-, Chrom- und Manganerze, unter Verwendung eines Schwebegas-Wärmetauschers bzw. -Reaktors getrocknet, vorgewärmt, calciniert und teilweise bzw. vorreduziert werden können. Für eine weitergehende Reduktion dieser vorreduzierten Feinerze kann ein Drehrohrofen oder ein Elektroofen nachgeschaltet sein, dem die vorreduzierten Feinerze - je nach Ausrüstung des Elektroofens - in heißbrikettiertem Zustand oder direkt zugeführt werden.

Aus der DE-B-11 60 462 ist eine Vorrichtung zur Reduktion feinzerkleinerter oxydischer Eisenerze bekannt, bei der das zu reduzierende Erz in eine Reduktionskammer des Zyklontyps geleitet wird, in welche gleichzeitig heißes reduzierendes, im Wesentlichen aus CO und CO₂ bestehendes Abgas aus einem Schmelzofen nach vorherigem Durchlaufen eines mit gepulvertem kohlenstoffhaltigen Brennstoff beschickten Regelofens eingeblasen wird.

Ein Beispiel für das Reduzieren von Feinerzen ist ferner in der DE-A-28 52 964 beschrieben. Danach werden die in einem Schwebegas-Wärmetauscher vorgewärmten, calcinierten und vorreduzierten Erze zunächst heißbrikettiert und anschließend in einem Elektroofen fertigreduziert, dessen heiße Abgase über eine Ofenabgasleitung zu zwei Zyklonen führt, die die unterste Zyklonstufe des Schwebegas-Wärmetauschers bilden. An diese Ofenabgasleitung ist eine Zusatzbrennkammer sowie - zwischen dieser Zusatzbrennkammer und der untersten Zyklonstufe - eine Zufuhrleitung für Feinkohle angeschlossen. Mit Hilfe der genannten Zusatzbrennkammer können die vom Elektroofen kommenden Abgase im Bedarfsfalle noch weiter erhitzt werden, während die - in Gasströmungsrichtung betrachtet - danach eingebrachte Feinkohle als festes Reduktionsmittel für die vorgewärmten und calcinierten Feinerze dient. Obwohl durch diese bekannte Ausführung eine wirtschaftliche und gleichbleibende Reduktion sowohl von Feinerzen als auch von Stückerzen geschaffen werden sollte, hat die Praxis gezeigt, dass diese Aufgabenstellung zumindest nicht in dem gewünschten und erforderlichen Maße erfüllt werden konnte.

Dieser Erfindung liegt daher die Aufgabe zugrunde, ein Verfahren gemäß dem Oberbegriff des Anspruches 1 sowie eine Anlage nach dem Oberbegriff des Anspruches 18 in der Weise weiter zu verbessern, dass die früheren Forderungen der erwähnten bekannten Ausführung erfüllt und damit auf einfache und doch äußerst zuverlässige, reproduzierbare Weise eine wirtschaftliche, gleichbleibende Reduktion insbesondere von Feinerzen ermöglicht wird, wobei außerdem gute Regulier- und Beeinflussungsmöglichkeiten des Schwebegas-Wärmetauschers gewährleistet werden sollen.

Diese Aufgabe wird zum einen - in verfahrenstechnischer Hinsicht - durch das Kennzeichen des Anspruches 1 und zum andern (in anlagentechnischer Hinsicht) durch die Kennzeichnungsmerkmale des Anspruches 5 gelöst.

Vorteilhafte Ausgestaltungen und Weiterbildungen der Erfindung sind Gegenstand der Unteransprüche.

Bei diesem erfindungsgemäßen Verfahren können die zu reduzierenden Feinerze zunächst in üblicher Weise in einer Wärmetauscherstufe oder in mehreren aufeinanderfolgenden Wärmetauscherstufen des Schwebegas-Wärmetauschers bzw.-Reaktors in der erforderlichen Weise vorgewärmt und calciniert werden. Nach einem wesentlichen Gedanken der vorliegenden Erfindung wird nun der Hauptteil, d.h. die Hauptarbeit der reduzierenden Wärmebehandlung der vorgewärmten und calcinierten Feinerze in einer in der untersten Wärmetauscherstufe des Schwebegas-Wärmetauschers (-Reaktors) besonders ausgebildeten Reaktorschleife mit nachgeordneter Zyklonabscheidung durchgeführt, und dazu wird ein heißes, gasförmiges Reduktionsmittel in den aufsteigenden Heißgasstrom eingeleitet, wodurch in dieser Reaktorschleife, und zumindest teilweise bis in die zugehörige Zyklonabscheidung hinein die notwendige reduzierende Atmosphäre geschaffen und aufrechterhalten werden kann. Bei den der Erfindung zugrundeliegenden Versuchen konnte bestätigt werden, daß durch die genannten einfachen Maßnahmen, d.h. insbesondere durch die Verwendung eines heißen gasförmigen Reduktionsmittels und einer entsprechend ausgebildeten besonderen Reaktorschleife konnte eine äußerst zuverlässige und reproduzierbare sowie besonders weitgehende Reduktion der vorgewärmten und calcinierten Feinerze erzielt werden, wobei sich diese erfindungsgemäße Reduktion der Feinerze besonders wirtschaftlich und sehr gleichbleibend in der untersten Wärmetauscherstufe durchführen läßt. Da somit die Feinerze bereits in der untersten Wärmetauscherstufe (Reduktions-Wärmetauscherstufe) des Schwebegas-Vorwärmers in einem sehr hohen Maße reduziert werden können, können die so reduzierten, vom Schwebegas-Wärmetauscher kommenden Feinerze vielfach bereits ohne Verwendung eines weiteren Ofens in bekannter Weise einer entsprechenden Weiterbehandlung zugeführt werden.

Es sei in diesem Zusammenhang noch ergänzt, daß die Verweilzeit der Feinerze im Schwebegas-Wärmetauscher selbst bei intensivem Wärmeaustausch bekanntlich verhältnismäßig kurz (zur Zeit nur Sekunden) gehalten werden kann, wodurch relativ rasche und gute Regulier- und Beeinflussungsmöglichkeiten des Schwebegas-Wärmetauschers und somit der Gesamtwärmebehandlung an die Hand gegeben werden, wobei die Intensität bzw. der Grad der Reduktion der Feinerze durch die Ausbildung, insbesondere durch Länge und Führung der Reaktorschleife besonders beeinflußt werden kann.

Gemäß einer vorteilhaften Ausgestaltung des erfindungsgemäßen Verfahrens wird das heiße gasförmige Reduktionsmittel als Reduktionsgas in einem der Reaktorschleife zugeordneten, gesonderten Reaktorgefäß durch unterstöchiometrisches Brennen von gasförmigen, flüssigen und/oder festen Brennstoffen erzeugt und von dort in die Reaktorschleife eingeleitet. Besonders zweckmäßig werden dabei in das Reaktorgefäß neben den Brennstoffen noch - die benötigte - Verbrennungsluft und gegebenenfalls zusätzliche Mischgase eingeführt. Als Verbrennungsluft kann Umgebungsluft oder in einem Wärmetauscher vorgewärmte Luft eingesetzt werden. Als Mischgas kann ebenfalls Umgebungsluft, vorgewärmte Luft oder auch sauerstoffarmes Abgas (z.B. aus einem Abgaskamin) verwendet werden, um zusätzlich die Erzeugung von Reduktionsgas beeinflussen zu können.

Gemäß einer besonders vorteilhaften Ausgestaltung des erfindungsgemäßen Verfahrens wird in das gleichzeitig eine Brennkammer und ein Reduktionsgefäß bildende Reaktorgefäß wenigstens ein Teil der vorgewärmten und calcinierten Feinerze eingeleitet, die in diesem Reaktorgefäß einer ersten Teilreduktion mittels des dort erzeugten Reduktionsgases ausgesetzt und danach für ihre weitere Reduktion gemeinsam mit dem Reduktionsgas in die Reaktorschleife eingeleitet werden. Hierdurch bieten sich verschiedene Möglichkeiten, die vorgewärmten und calcinierten Feinerze einer intensivierten Reduktionsbehandlung auszusetzen, d.h. außer der Möglichkeit, das Reaktorgefäß nur als Brennkammer zur Erzeugung des heißen Reduktionsgases zu benutzen, das dann in die Reaktorschleife, in die auch die vorgewärmten und calcinierten Feinerze insgesamt eingeleitet werden können, einzuführen, kann wenigstens ein vorzugsweise einstellbarer Anteil der vorgewärmten und calcinierten Feinerze in dem Reaktorgefäß einer ersten Teilreduktion unterworfen werden, während der übrige Anteil der vorgewärmten und calcinierten Feinerze direkt in die Reaktorschleife eingeleitet wird, und darüber hinaus kann selbstverständlich auch der ganze Anteil der vorgewärmten und calcinierten Feinerze zunächst im Reaktorgefäß teilreduziert und dann in der Reaktorschleife weitgehend fertigreduziert werden.

Bei all diesen Möglichkeiten der reduzierenden Wärmebehandlung erweist sich die Verwendung des gasförmigen Reduktionsmittels, also vor allem des in dem Reaktorgefäß erzeugten heißen Reduktionsgases als besonders vorteilhaft bzw. wesentlich für die angestrebte weitgehende Reduktion der Feinerze im Schwebegas-Wärmetauscher bzw. in dessen unterster Wärmetauscherstufe, der auch das Reaktorgefäß zugeordnet ist, d.h. dieses Reaktorgefäß ist zweckmäßig ein Teil der Reduktions-Wärmetauscherstufe im Schwebegas-Wärmetauscher gemäß diesem erfindungsgemäßen Verfahren.

Für den Fall, daß die bereits weitgehend reduzierten Feinerze aus dem Schwebegas-Wärmetauscher beispielsweise noch höher reduziert werden sollen, wird es für zweckmäßig angesehen, die aus der untersten bzw. Reduktions-Wärmetauscherstufe des Schwebegas-Wärmetauschers kommenden Feinerze (die also bereits sehr weitgehend reduziert sind) in einem Drehrohrofen oder wenigstens einem Elektroofen noch einer korrigierenden und/oder einer Endreduktion zu unterwerfen. Für diesen Fall kann es ferner zweckmäßig sein, den Feinerzen zur Unterstützung der korrigierenden und/oder Endreduktion im Drehrohr- und/oder Elektroofen noch einen Anteil feinkörnige Kohle und/oder andere organische Stoffe (insbesondere heizenergiehaltige Abfallstoffe oder dergleichen) als zusätzliches Reduktionsmittel zuzugeben bzw. zuzumischen.

Ferner kann es im vorhergehenden Zusammenhang, wonach im Drehrohr- oder Elektroofen aus dem zusätzlichen Reduktionsmittel Reduktionsgas erzeugt wird, vorteilhaft sein, die Reduktionsgas enthaltenden heißen Abgase des dem Schwebegas-Wärmetauscher in Erz-Fließrichtung nachgeordneten Ofens als Heißgase in die Reaktorschleife der Reduktions-Wärmetauscherstufe einzuleiten und für die Reduktion im Schwebegas-Wärmetauscher auszunutzen.

Für den Fall, daß die reduzierten Feinerze beispielsweise in einem chemischen Aufschlußverfahren weiterbehandelt werden sollen, ist es zweckmäßig, daß die reduzierten Feinerze in einer insbesondere durch einen indirekten Trommelkühler gebildeten Kühlzone entsprechend abgekühlt werden, beispielsweise auf eine Temperatur unter 120°C.

Wenn nach dem erfindungsgemäßen Verfahren feuchte Ausgangserze reduziert werden sollen, dann können diese gemäß einer vorteilhaften weiteren Ausgestaltung der Erfindung zunächst mit Hilfe von heißen Abgasen aus dem Schwebegas-Wärmetauscher und vorzugsweise in einem Steigrohrtrockner getrocknet werden.

Gemäß einer ähnlichen Ausgestaltung der Erfindung wird vorgeschlagen, daß wenigstens teilweise stückige und feuchte Ausgangserze vor ihrer Reduktion zunächst zerkleinert und getrocknet werden, wobei dieses Zerkleinern und Trocknen vorzugsweise in einer Mahltrocknungseinrichtung unter Zuführung von heißen Abgasen aus dem Schwebegas-Wärmetauscher vorgenommen wird.

Insgesamt wird es bei diesem erfindungsgemäßen Verfahren für zweckmäßig angesehen, wenn die Reduktionsarbeit in der die Reaktorschleife enthaltenden untersten Wärmetauscherstufe des Schwebegas-Wärmetauschers bei einer Temperatur von etwa 600 bis 1.000°C, vorzugsweise zwischen etwa 700 und 900°C durchgeführt wird.

Dabei kann es ferner von Vorteil sein, wenn für die Reduktion der vorgewärmten und calcinierten Feinerze in der untersten Wärmetauscherstufe Kohlenmonoxid (CO) und/oder (elementarer) Wasserstoff (H₂) enthaltendes bzw. damit angereicherters Reduktionsgas verwendet wird (z.B. durch stöchiometrisches Verbrennen eines eingedüsten Brennstoff es).

Insbesondere in diesem Zusammenhang sei erwähnt, daß die im Reaktorgefäß erzeugten Reduktionsgase infolge der unterstöchiometrischen Verbrennung von Brennstoff (z.B. Schweröl) CO- und H₂-Gase enthalten, die für die Reduktion der Feinerze (z.B. der darin enthaltenen Eisenoxide) genutzt werden. Für diese Reduktion, aber auch zur Deckung des Wärmebedarfs für die Reduktion und die Strahlungsverluste müssen mehr CO- und H₂-Gasanteile im Gasstrom enthalten sein als theoretisch für die Reduktion erforderlich sind. Diese überschüssigen Gasanteile werden auf dem Weg durch den Schwebegas-Wärmetauscher bzw. -Reaktor unter zusätzlicher Luftzugabe allmählich verbrannt, so daß ein möglichst gleich hohes Temperaturniveau gehalten wird, wobei vorzugsweise in der Wärmetauscherstufe über der Reduktions-Wärmetauscherstufe alle brennbaren Gasbestandteile verbrannt sein sollen.

Diese und weitere Einzelheiten der Erfindung seien nachfolgend im Zusammenhang mit einer erfindungsgemäß ausgeführten Anlage zur Reduktion von Feinerzen näher beschrieben. Eine solche Anlage ist in der beigefügten Zeichnung beispielsweise veranschaulicht. In dieser Zeichnung zeigen
- Fig.1: ein zum Teil vereinfacht dargestelltes Fließschema eines Ausführungsbeispieles für eine komplettierte Anlage nach der Erfindung;
- Fig.2: ein Teil-Fließschema für eine Ausführungsvariante der Anlage, wonach dem Schwebegas-Wärmetauscher ein Drehrohrofen und ein Trommelkühler nachgeordnet sind.

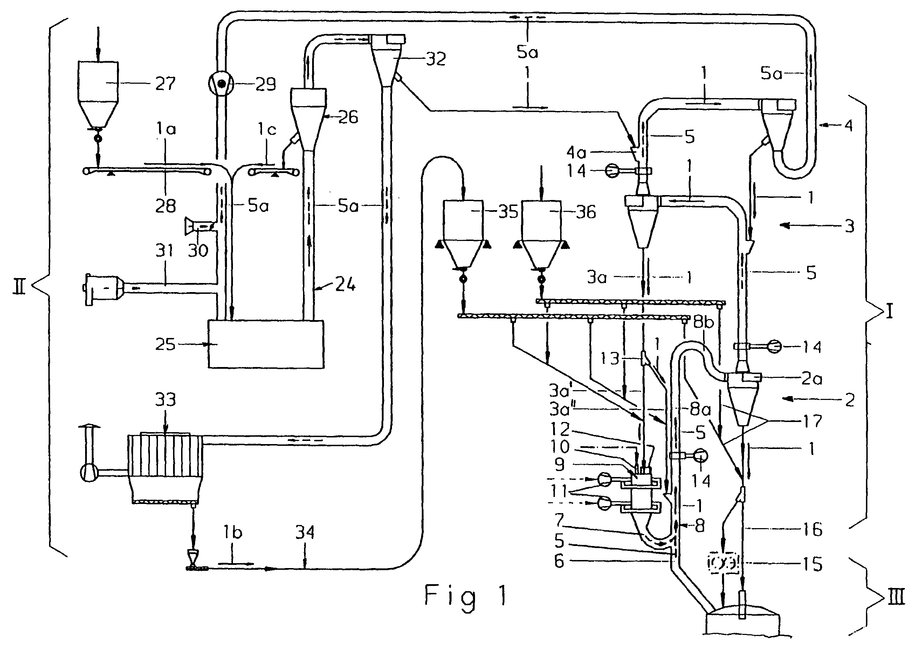

Die erfindungsgemäße Anlage zur Reduktion von Feinerzen sei zunächst anhand des Fließschemas gemäß Fig.1 beschrieben. Der für die eigentliche Reduktionsarbeit wesentliche Hauptteil dieser Reduktionsanlage wird vor allem durch eine Schwebegas-Reaktor bzw. Schwebegas-Wärmetauscher I gebildet, der vorzugsweise - wie in Fig.1 veranschaulicht - allgemein etwa in Form eines an sich bekannten mehrstufigen Zyklonwärmetauschers ausgebildet ist und eine geeignete Anzahl von übereinander angeordneten Zyklonstufen als Wärmetauscherstufen enthält, worauf später noch näher eingegangen wird. Diesem Schwebegas-Wärmetauscher I ist - in Fließrichtung der durch durchgehende Pfeile 1 symbolisierten Erze betrachtet - eine Mahltrocknungseinrichtung II vorgeschaltet und ein Nachbehandlungsofen III nachgeordnet, der in diesem Beispiel durch wenigstens einen Elektroofen gebildet wird.

Zur allgemeinen Ausbildung des Schwebegas-Wärmetauschers I sei gesagt, daß dieser eine dem jeweiligen Einsatzfall zweckmäßig angepaßte Anzahl von in üblicher Weise übereinander angeordneten Zyklonstufen enthalten kann, wobei normalerweise etwa 3 bis 5 Zyklonstufen ausreichen werden. Nach dem Ausführungsbeispiel gemäß Fig.1 enthält der Schwebegas-Wärmetauscher I drei im wesentlichen übereinander angeordnete Zyklonstufen, nämlich eine erste, unterste Zyklonstufe 2, eine zweite, mittlere Zyklonstufe 3 und eine dritte, oberste Zyklonstufe 4. Wie durch doppelt gezeichnete Gasleitungen und durch einfache, durchgehende Linien dargestellte Gutleitungen zu erkennen ist, stehen die Zyklonstufen 2, 3, 4 dieses Schwebegas-Wärmetauschers I durch die entsprechenden Gas- und Gutleitungen in der Weise miteinander in Verbindung, daß oben zugeführte Feinerze diesen Schwebegas-Wärmetauscher I im allgemeinen Gegenstrom zu von unten zugeführten und aufsteigenden Heißgasen (gestrichelte Pfeile 5) von oben nach unten durchsetzen. In diesem Schwebegas-Wärmetauscher I dienen die beiden oberen Zyklonstufen 3, 4 zum Vorwärmen und Vorcalcinieren bzw. Calcinieren der bei 4a der obersten Zyklonstuf e 4 zugeführten Feinerze (Pfeil 1).

Die erste, unterste Zyklonstufe 2 des Schwebegas-Wärmetauschers I ist als Reduktionsstufe ausgebildet, und an diese unterste Zyklonstufe 2 ist eine Heißgaszuführung in Form einer vom Nachbehandlungsofen/Elektroofen III kommenden Heißgasleitung 6 angeschlossen, d.h. die heißen Ofenabgase (gestrichelte Pfeile 5) dieses Elektroofens III werden zumindest zum Erhitzen bzw. zur Wärmebehandlung imd ggf. teilweise auch zusätzlich zur Reduktion (soweit reduzierende Gasanteile bzw. CO- und H₂-Gase enthalten sind) der Feinerze in dem Schwebegas-Wärmetauscher I ausgenutzt. Außerdem ist im Bereich des unteren Endes dieser untersten Zyklonstufe 2 noch eine Zuführung bzw. Zuführungsleitung 7 angeschlossen, durch die ein Reduktionsmittel in die aufsteigenden Heißgase (Pfeil 5) eingeleitet wird, worauf später noch näher eingegangen wird.

Damit in der ersten, untersten Zyklonstufe 2 die Hauptreduktionsarbeit geleistet werden kann, ist diese Zyklonstufe 2 mit einer hinreichend langen Reaktorschleife 8 ausgebildet, die - wie Fig.1 deutlich zeigt - einen in Fortsetzung der Heißgasleitung 6 im wesentlichen vertikal aufsteigenden, relativ langen Steigleitungsabschnitt 8a und einen sich daran anschließenden, etwa schwanenhalsartig gekrümmten oberen Abschnitt 8b aufweist, mit dem die Reaktorschleife 8 in wenigstens einen nachgeordneten Abscheidezyklon 2a dieser Zyklonstufe 2 einmündet. Neben der Heißgasleitung 6 ist im unteren Endbereich des Steigleitungsabschnittes 8a dieser Reaktorschleife 8 die bereits erwähnte Zuführungsleitung 7 für das Reduktionsmittel angeschlossen.

Wie bereits weiter oben erläutert worden ist, wird es als ein wesentlicher Gedanke angesehen, als Reduktionsmittel ein gasförmiges Reduktionsmittel und vor allem ein besonders aufbereitetes Reduktionsgas zu verwenden. Dieses gasförmige Reduktionsmittel bzw. Reduktionsgas kann zwar grundsätzlich von jeder geeigneten Quelle herangeführt werden, soweit es für eine ausreichende Reduktionsarbeit verwendet werden kann. Bei dieser Erfindung wird es jedoch besonders vorgezogen, wenn zur Erzeugung dieses Reduktionsgases ein Reaktorgefäß 9 verwendet wird, das über einen Leitungsanschluß mit der Reaktorschleife 8 verbunden ist, wobei dieser Leitungsanschluß auf einfache Weise zweckmäßig durch die bereits oben erwähnte Zuführungsleitung 7 gebildet wird. An dieses Reaktorgefäß 9 sind ferner wenigstens ein Brenner 10 als Brennstoff-Zuführeinrichtung und wenigstens eine Verbrennungsluft-Zuführung 11 angeschlossen. Die Zuführungen 11 enthalten zweckmäßig entsprechende Ventilatoren und an den Umfang des Reaktorgefäßes 9 angeschlossene Verbindungsleitungen, so daß dadurch Verbrennungsluft und gegebenenfalls zusätzliche Mischgase in dieses Reaktorgefäß 9 - vorzugsweise regelbar - eingeblasen werden können. Der Brenner ist so einstellbar bzw. regelbar vorzugsweise dem oberen Ende des Reaktorgefäßes 9 zugeordnet, daß geeignete gasförmige, feste und/oder flüssige Brennstoffe unterstöchiometrisch im Reaktorgefäß 9 verbrannt werden können.

Desweiteren wird es als besonders vorteilhaft angesehen, wenn dieses Reaktorgefäß 9 gleichzeitig als in der zuvor erwähnten Weise benutzte Brennkammer und als Reduktionsgefäß für eine erste reduzierende Behandlung der vorgewärmten und calcinierten Feinerze (Pfeil 1) ausgebildet ist. Das Reaktorgefäß 9 weist daher an seinem oberen Ende wenigstens einen Zuführstutzen 12 für Feinerz auf.

Wie in Fig.1 ferner zu erkennen ist, ist in der von der zweiten, mittleren Zyklonstufe 3 zur untersten Zyklonstufe (Reduktions-Wärmetauscherstufe) 2 führenden Gutleitung 3a für die vorgewärmten und calcinierten Feinerze ein verstellbares Abzweig- bzw. Aufteilorgan 13 angeordnet, von dem eine erste Abzweigleitung 3a' zum unteren Endbereich des Steigleitungsabschnittes 8a der Reaktorschleife 8 und eine zweite Abzweigleitung 3a" zum Zuführstutzen 12 des Reaktorgefäßes 9 führt. Auf diese Weise kann im Bedarfsfalle bzw. in Anpassung an den jeweils gewünschten/notwendigen Reduktionsgrad das gesamte vorgewärmte und calcinierte Feinerz entweder direkt in den Steigleitungsabschnitt 8a der Reaktorschleife 8 oder zuvor in das Reaktorgefäß 9 eingeleitet werden, oder es können einstellbare Anteile der vorgewärmten und calcinierten Feinerze teilweise in die Reaktorschleife 8 (Steigleitungsabschnitt 8a) und teilweise in das Reaktorgefäß 9 eingeleitet werden.

Die in dem Reaktorgefäß 9 einer ersten Teilreduktion mit dem darin erzeugten Reduktionsgas unterworfenen Feinerze werden anschließend über die verbindungs- bzw. Zuführungsleitung 7 gemeinsam mit den noch unverbrauchten heißen Reduktionsgasen in den unteren Endbereich des Steigleitungsabschnittes 8a der Reaktorschleife 8 eingeleitet, und zwar zweckmäßig oberhalb der Anschlußstelle für die Zuführung der Heißgase (Pfeile 5) und unterhalb der Zuführstelle für die direkte Zuführung von vorgewärmten und calcinierten Feinerzen in diese Reaktorschleife 8. Es leuchtet ein, daß die in dem Reaktorgefäß einer ersten Reduktionsbehandlung unterworfenen Feinerze nach anschließendem Durchsetzen der Reaktorschleife 8 und des zugehörigen Abscheidezyklons 2a besonders intensiv und weitreichend reduziert worden sind.

Wie bereits weiter oben bei der Darstellung des erfindungsgemäßen Verfahrens erläutert worden ist, wird dafür gesorgt, daß in dem erzeugten Reduktionsgas ein für die Reduktionsarbeit ausreichender Anteil an CO- und H₂-Gasen vorhanden ist, d.h. um geeignete Reduktionsgrade erzielen zu können, sind diese Gase in einer Überschußmenge im aufsteigenden Heißgasstrom zumindest in der untersten Zyklonstufe 2 vorhanden. Sie können nachverbrannt und für die Aufheizung und Temperatursteuerung genutzt werden. Dazu kann es zweckmäßig sein, wenn an die Reaktorschleife 8 und gegebenenfalls an wenigstens eine aufsteigende Gasleitung zu den oberen Zyklonstufen 3, 4 zumindest ein Zuführungsanschluß 14 (zweckmäßig mit zugeordnetem Ventilator) zum Zuführen von weiterer verbrennungsluft und/oder von reinem Sauerstoff für die Nachverbrennung von Reduktionsgas angeschlossen ist. Diese zusätzliche Verbrennungsluft (und/oder Sauerstoff) kann damit wahlweise und einstellbar zweckmäßig in die Reaktorschleife 8 und gegebenenfalls auch noch in wenigstens eine Gasleitung der oberen Zyklonstufen 3, 4 eingeblasen werden, so daß erforderlichenfalls eine Nachheizung des aufsteigenden Heißgasstromes erfolgen kann, um stets eine optimale Wärmebehandlung der aufgegebenen Feinerze im Schwebegas-Wärmetauscher I sicherstellen zu können.

Wie bereits erwähnt worden ist, ist der Reduktions-Wärmetauscherstufe, d.h. der untersten Zyklonstufe 2 des Schwebegas-Wärmetauschers I im Beispiel gemäß Fig.1 ein Nachbehandlungsofen III in Form wenigstens eines Elektroofens nachgeordnet. In diesem Nachbehandlungsofen III kann grundsätzlich eine korrigierende Reduktion oder eine Endreduktion bzw. Nachreduktion der den Schwebegas-Wärmetauscher I verlassenden reduzierten Feinerze vorgenommen werden, wenn dies für eine vorgegebene Weiterbehandlung der Feinerze erforderlich ist.

Je nach Ausführung bzw. Betriebsweise des Elektroofens kann es zweckmäßig sein, die aus dem Schwebegas-Wärmetauscher I kommenden reduzierten Erze direkt in den Elektroofen einzuleiten oder sie vorher stückig zu machen, indem sie im heißen Zustand brikettiert werden, wozu gemäß Fig.1 im Bereich zwischen dem Schwebegas-Wärmetauscher I und dem Elektroofen strichpunktiert eine Heißbrikettierpresse 15 sowie eine geeignete Umschaltklappe oder dergleichen angedeutet ist.

Bei der zuvor beschriebenen Nachordnung des Nachbehandlungsofens/Elektroofens III kann es ferner erforderlich sein, den aus dem Abscheidezyklon 2a der untersten Zyklonstufe (Reduktions-Wärmetauscherstufe) 2 kommenden heißen, reduzierten Feinerzen noch zusätzlich Kohle, vorzugsweise in Form von Feinkohle zuzuführen. Daher ist an die vom Abscheidezyklon 2a der Reduktions-Wärmetauscherstufe/untersten Zyklonstufe 2 zum Elektroofen/Nachbehandlungsofen III führenden Gutleitung 16 noch eine Leitung 17 zum dosierten Zuführen von Feinkohle angeschlossen. Diese dem nachgeordneten Ofen III aufzugebende Feinkohle ist zweckmäßig auf eine Korngröße von kleiner als 3 mm, vorzugsweise kleiner als 1 mm zerkleinert worden.

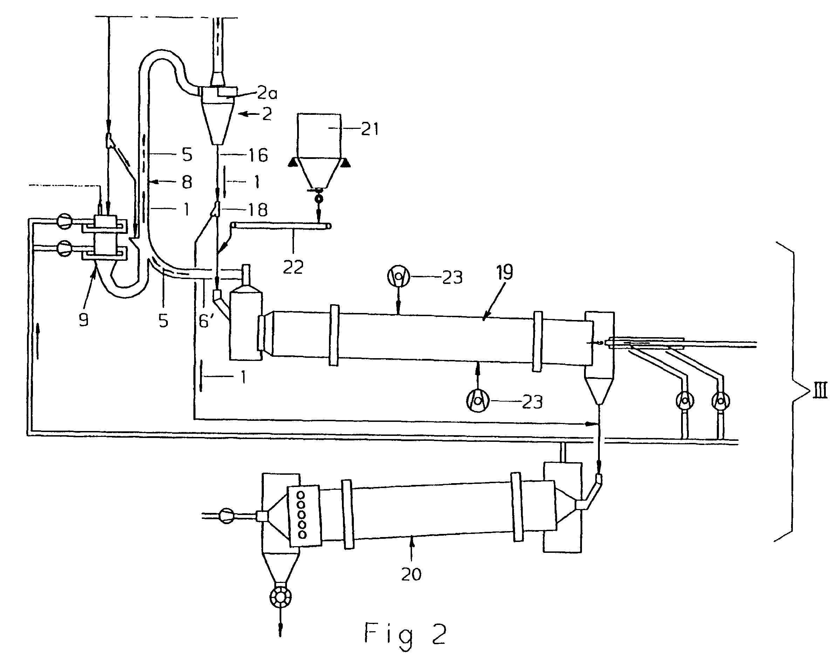

Im Zusammenhang mit den dem Schwebegas-Wärmetauscher I in Erzfließrichtung (durchgehende Pfeile 1) nachgeordneten Einrichtungen sei an dieser Stelle auch gleich auf die in Fig.2 veranschaulichte Ausführungsvariante der erfindungsgemäßen Anlage hingewiesen. In dieser Teildarstellung der Fig.2 ist von dem Schwebegas-Wärmetauscher I der Einfachheit halber lediglich dessen als Reduktions-Wärmetauscherstufe ausgebildete unterste Zyklonstufe 2 mit Reaktorschleif e 8, Reaktorgefäß 9 und Zyklonabscheider 2a veranschaulicht, der über seine nach unten führende Gutleitung 16 und gegebenenfalls über ein in dieser Gutleitung 16 angeordnetes Abzweigorgan 18 einerseits direkt an einen Drehrohrofen 19 und andererseits an einen indirekten Trommelkühler 20 angeschlossen ist. In dieser Ausführungsvariante (Fig.2) bildet der Drehrohrofen 19 - anstelle wenigstens eines Elektroofens - den Nachbehandlungsofen III, um das vom Schwebegas-Wärmetauscher I bzw. dessen unterster Zyklonstufe 2 kommende reduzierte Feinerz einer korrigierenden bzw. Endreduktion zu unterwerfen, falls dies erforderlich ist. Auch in diesem Falle können die heißen Abgase des Drehrohrofens 19 bzw. Nachbehandlungsofens III über eine Ofenabgasleitung 6' als Heißgase (gestrichelte Pfeile 5) in die Reaktorschleife 8 eingeführt werden. Die aus diesem Drehrohrofen 19 ausfallenden, fertig reduzierten Feinerze können im Bedarfsfalle anschließend in den indirekten Trommelkühler 20 eingeleitet und dort in an sich bekannter Weise auf eine ausreichende Temperatur, beispielsweise unter etwa 120°C, abgekühlt werden.

Grundsätzlich besteht in besonderen Anwendungsfällen aber auch noch die Möglichkeit, die Feinerze im Drehrohrofen einer ersten Nachreduktion und in einem darauf folgenden Elektroofen einer zweiten Nachreduktion zu unterwerfen.

Auch bei der Nachbehandlung der aus der untersten Zyklonstufe 2 des Schwebegas-Wärmetauschers I kommenden reduzierten Feinerze kann es zweckmäßig sein, ihnen vor oder bei ihrem Eintritt in den Drehrohrofen 19 noch einen entsprechend großen Anteil an Feinkohle zuzudosieren und zuzumischen, wozu ein Feinkohle-Dosierbehälter 21 mit Dosierförderer 22 an das untere Ende der Gutleitung 16 angeschlossen sein kann. Darüber hinaus kann es in diesem Zusammenhang zweckmäßig sein, wenn am Drehrohrofen 19, insbesondere an dessen Mantel, noch in an sich bekannter Weise Ventilatoren 23 zum Zuführen zusätzlicher Verbrennungsluft angeordnet sind.

Wie bereits zuvor angedeutet worden ist, besteht durch die Anordnung des Abzweigorgans 18 in der vom Schwebegas-Wärmetauscher I kommenden Gutleitung 16 auch die Möglichkeit, den Drehrohrofen 19 zu umgehen, d.h. unter Ausschaltung bzw. Vermeidung einer korrigierenden oder Endreduktion, die in der untersten Zyklonstufe 2 weitgehend reduzierten Feinerze (Pfeil 1) direkt dem Trommelkühler 2 zuzuführen. Diese reduzierten Feinerze können dann - etwa für eine entsprechende chemische Weiterbehandlung - in der notwendigen Weise abgekühlt werden.

Bei dem in Fig.1 veranschaulichten Ausführungsbeispiel der erfindungsgemäßen Reduktionsanlage bestehen darüber hinaus noch Möglichkeiten, die Ausgangserze vor ihrer Zuführung zum oben beschriebenen Schwebegas-Wärmetauscher I in geeigneter Weise aufzubereiten, d.h. feuchte Ausgangserze genügend zu trocknen und relativ grobstükkige Ausgangserze in der notwendigen Weise zu zerkleinern. Aus diesem Grunde sind dem Schwebegas-Wärmetauscher I geeignete Einrichtungen zum Trocknen und/oder Zerkleinern feuchter und/oder stückiger Ausgangserze vorgeschaltet, wobei diese Einrichtungen mit den heißen Abgasen (gestrichelte Pfeile 5a) des Schwebegas-Wärmetauschers I beaufschlagt sind, d.h. die noch heißen Abgase des Schwebegas-Wärmetauschers I können noch zum Trocknen der Ausgangserze ausgenutzt und dabei weiter abgekühlt werden.

Nach dem in Fig.1 veranschaulichten Ausführungsbeispiel können die Einrichtungen zum Trocknen und/oder Zerkleinern der Ausgangserze zweckmäßig durch die bereits weiter oben erwähnte Mahltrocknungseinrichtung II mit zugeordnetem Steigrohrtrockner 24 gebildet sein. Diese Mahltrocknungseinrichtung II kann in an sich bekannter Weise ausgeführt sein und z.B. als Haupteinrichtungsteile irgendeine geeignete Mühle (z.B. Schlägermühle, Rohrmühle mit oder ohne Trockenkammer und dergleichen) 25 und wenigstens einen Windsichter 26 enthalten, wobei die Mühle 25 und der Sichter 26 durch eine Gasleitung oder den Steigrohrtrockner 24 miteinander verbunden sind. Feuchtes und/oder stückiges Ausgangserz (Pfeil 1a) wird aus einem Vorratsbehälter 27 über ein Förderorgan 28 dosiert der Mühle 25 aufgegeben, der außerdem noch die heißen Wärmetauscherabgase (Pfeile 5a) über einen Ventilator 29 zugeführt werden, wobei diesen heißen Wärmetauscherabgasen (5a) gegebenenfalls noch Frischluft (über einen Zuführstutzen 30) und/oder Heißluft (über eine Heißluftleitung 31) zugemischt werden kann. Die in der Mühle 25 zerkleinerten und im Steigrohrtrockner 24 getrockneten Ausgangserze werden im Windsichter 26 in Feingut/Feinerze und Grobgut bzw. Grieße getrennt. Während die Grieße - gemäß Pfeil 1c - für ihre weitere Zerkleinerung zur Mühle 25 zurückgeführt werden, werden die ausreichend zerkleinerten Feinerze zusammen mit den Abgasen in einen Abscheider 32 geführt, wo die Feinerze von den heißen Abgasen getrennt werden. während die abgetrennten Feinerze (Pfeil 1) dem Schwebegas-Wärmetauscher I zugeleitet werden, werden die Abgase (gestrichelte Pfeile 5a) einer geeigneten Entstaubungseinrichtung 33 zugeführt, in der die in diesen Abgasen noch enthaltenen Erzstäube (Feinsterze) ausgeschieden werden. Diese abgeschiedenen Erzstäube (Pfeil 1b) können entweder anderweitig verarbeitet oder - was im allgemeinen zweckmäßig sein wird - den zu reduzierenden oder gegebenenfalls auch den weitgehend fertigreduzierten Erzen an entsprechend geeigneten Stellen zugeführt werden, wie es in Fig.1 durch geeignete Leitungen und Fördereinrichtungen angedeutet ist. Dazu kann insbesondere eine pneumatische Staubfördereinrichtung 34 vorgesehen sein, deren Leitung von der Entstaubungseinrichtung 33 zum Schwebegas-Wärmetauscher I, besonders zweckmäßig aber zuvor in einen Zwischenbehälter 35 führt, von dem aus die Erzstäube dosiert den entsprechenden Stellen insbesondere im Bereich der untersten Zyklonstufe 2 des Schwebegas-Wärmetauschers I zugeleitet werden. Parallel dazu kann im Bedarfsfalle außerdem ein Feinkohlebehälter 36 vorgesehen sein, aus dem - wie weiter oben näher erläutert - den im Nachbehandlungsofen III noch fertig zu reduzierenden Feinerzen ein entsprechender Anteil Feinkohle zudosiert werden kann (z.B. über die Leitung 17).

Die Mahltrocknungseinrichtung II kann ferner auch noch so ausgestaltet werden, daß zusammen mit den Ausgangserzen 1a der für die oben erwähnte korrigierende oder Endreduktion im Nachbehandlungsofen III, 19 erforderliche Anteil an Kohle bzw. Feinkohle in dieser Mahltrocknungseinrichtung II zerkleinert wird.

Bei dem anhand Fig.1 veranschaulichten Ausführungsbeispiel der Reduktionsanlage besteht ferner auch noch die durch entsprechende Leitungspfeile angedeutete Möglichkeit, im Bedarfsfalle einen Anteil Feinkohle aus dem Feinkohlebehälter 36 - gemeinsam mit Erzstäuben und/oder vorgewärmten und calcinierten Erzen - in das Reaktorgefäß 9 einzubringen.

## Patentansprüche

1. Verfahren zur Reduktion von Feinerzen, wobei vorbereitete Feinerze (1) einen mehrstufigen Schwebegas-Wärmetauscher (I) im allgemeinen Gegenstrom zu aufsteigenden Heißgasen (5) von oben nach unten durchsetzen und dabei in wenigstens einer oberen Wärmetauscherstufe (3, 4) vorgewärmt und calciniert und anschließend in wenigstens einer unteren Wärmetauscherstufe (2) unter Zugabe eines Reduktionsmittels in den zugeführten Heißgasstrom einer reduzierenden Wärmebehandlung ausgesetzt werden,
**dadurch gekennzeichnet,**
**dass** der Hauptteil der reduzierenden Wärmebehandlung der vorgewärmten und calcinierten Feinerze in einer in der untersten Wärmetauscherstufe (2) des Schwebegas-Wärmetauschers (I) ausgebildeten Reaktorschleife (8) durchgeführt wird, wobei die Reaktorschleife eine Steigleitungsabschnitt (8a) und einen sich daran anschließenden gekrümmten Abschnitt (8b) aufweist, mit dem die Reaktorschleife in wenigstens einen nachgeordneten Abscheidzyklon (2a) mündet und dazu ein heißes, gasförmiges Reduktionsmittel in den aufsteigenden Heißgasstrom eingeleitet wird.

2. Verfahren nach Anspruch 1, **dadurch gekennzeichnet, dass** das heiße, gasförmige Reduktionsmittel als Reduktionsgas in einem der Reaktorschleife (8) zugeordneten, gesonderten Reaktorgefäß (9) durch unterstöchiometrisches Verbrennen von gasförmigen, flüssigen und/oder festen Brennstoffen erzeugt und von dort in die Reaktorschleife (8) eingeleitet wird.

3. Verfahren nach Anspruch 2 und/oder 3, **dadurch gekennzeichnet, dass** in das gleichzeitig eine Brennkammer und ein Reduktionsgefäß bildende Reaktorgefäß (9) wenigstens ein Teil der vorgewärmten und calcinierten Feinerze eingeleitet wird, die in diesem Reaktorgefäß einer ersten Teilreduktion mittels des dort erzeugten Reduktionsgases ausgesetzt und danach für ihre weitere Reduktion gemeinsam mit dem Reduktionsgas in die Reaktorschleife (8) eingeleitet werden.

4. Verfahren nach Anspruch 1 oder 2, **dadurch gekennzeichnet, dass** an wenigstens einer Stelle (14) entlang der Länge der Reaktorschleife (8) und gegebenenfalls der oberen Wärmetauscherstufe (3, 4) zusätzliche Verbrennungsluft und/oder reiner Sauerstoff zur Nachverbrennung des Reduktionsgases eingeführt wird.

5. Anlage zur Reduktion von Feinerzen, enthaltend einen mehrstufigen Schwebegas-Wärmetauscher (I) mit wenigstens einer oberen Wärmetauscherstufe (3, 4) zum Vorwärmen und Calcinieren von Feinerzen (1) sowie wenigstens einer als Reduktionsstufe für die vorgewärmten und calcinierten Feinerze ausgebildeten unteren Wärmetauscherstufe (2), an die Zuführungen (6, 7) für Heißgas und Reduktionsmittel angeschlossen sind, wobei die Wärmetauscherstufen (2, 3, 4) des Schwebegas-Wärmetauschers durch Gasund Gutleitungen derart miteinander in Verbindung stehen, dass oben zugeführte Feinerze diesen Schwebegas-Wärmetauscher (I) im allgemeinen Gegenstrom zu den unten zugeführten Heißgasen (5) von oben nach unten durchsetzen,
**dadurch gekennzeichnet,**
**dass** die unterste Wärmetauscherstufe (2) zur Durchführung der Hauptreduktionsarbeit mit einer Reaktorschleife (8) ausgebildet ist, die durch einen Steigleitungsabschnitt (8a) und einen gekrümmten oberen Abschnitt (8b) gebildet wird, mit dem die Reaktorschleife in wenigstens einen nachgeordneten Abscheidezyklon (2a) dieser Wärmetauscherstufe einmündet und dass im unterem Endbereich des Steigleitungsabschnitts die Heißgaszuführung (6) angeschlossen ist und der Steigleitungsabschnitt außerdem mit einem Leitungsanschluss (7) für die Zuführung eines heißen Reduktionsgases in Verbindung steht.

6. Anlage nach Anspruch 5, **dadurch gekennzeichnet, dass** zur Erzeugung des Reduktionsgases ein Reaktorgefäß (9) vorgesehen ist, das über den Leitungsanschluss (7) mit der Reaktorschleife (8) verbunden ist und an das wenigstens eine Brennstoff-Zuführeinrichtung (10) und wenigstens eine Verbrennungsluft-Zuführung (11) angeschlossen sind.

7. Anlage nach Anspruch 6, **dadurch gekennzeichnet, dass** das Reaktorgefäß (9) gleichzeitig als Brennkammer zur Erzeugung des heißen Reduktionsgases durch unterstöchiometrische Verbrennung von gasförmigen, flüssigen und/oder festen Brennstoffen und als Reduktionsgefäß für eine erste reduzierende Behandlung der vorgewärmten und calcinierten Feinerze (1) ausgebildet ist.

8. Anlage nach Anspruch 7, **dadurch gekennzeichnet, dass** an dem Reaktorgefäß (9) wenigstens ein Brenner (10) zum unterstöchiometrischen Verbrennen der Brennstoffe und Ventilatoren zum Zuführen von Verbrennungsluft und gegebenenfalls Mischgasen angeschlossen und wenigstens ein Zuführstutzen (12) für vorgewärmte und calcinierte Feinerze (1) sowie gegebenenfalls für Feinkohle vorgesehen sind.

9. Anlage nach Anspruch 5 und/oder 7, **dadurch gekennzeichnet, dass** an die Reaktorschleife (8) und gegebenenfalls an wenigstens eine aufsteigende Gasleitung der wenigstens einen oberen Wärmetauscherstufe (3, 4) zumindest ein Zuführungsanschluss (14) zum Zuführen von weiterer Verbrennungsluft und/oder Sauerstoff zur Nachverbrennung von Reduktionsgas angeschlossen ist.

10. Anlage nach Anspruch 5, **dadurch gekennzeichnet, dass** - in Fließrichtung der Feinerze (1) betrachtet - der Reduktions-Wärmetauscherstufe (2) des Schwebegas-Wärmetauschers (I) ein Nachbehandlungsofen (III) zur korrigierenden oder Endreduktion der Feinerze, vorzugsweise in Form eines Drehrohrofens (19) oder wenigstens eines Elektroofens nachgeordnet ist.

## Claims

1. Method for the reduction of fine ores, in which prepared fine ores (1) pass from the top downwards through a multi-stage gas suspension preheater (I) generally in counter-current flow to rising hot gases (5) and are preheated and calcined in at least one upper heat exchanger stage (3, 4) and then are subjected to a reducing heat treatment in at least one lower heat exchanger stage (2) with a reducing agent being added into the delivered hot gas stream,
**characterised in that**
the principal part of the reducing heat treatment of the preheated and calcined fine ores is carried out in a reactor loop (8) specially constructed in the lowest heat exchanger stage (2) of the gas suspension preheater (I), said reactor loop has an uptake conduit section (8a) and a curved section (8b) adjoining section (8a) and with which the reactor loop 8 opens into at least one precipitating cyclone (2a) which is disposed downstream, and for this purpose a hot gaseous reducing agent is introduced into the rising hot gas stream.

2. Method as claimed in Claim 1, **characterised in that** the hot gaseous reducing agent is produced as a reducing gas in a separate reactor vessel (9) associated with the reactor loop (8) by sub-stoichiometric burning of gaseous, liquid and/or solid fuels and from there is introduced into the reactor loop (8).

3. Method as claimed in Claim 2, **characterised in that** at least some of the preheated and calcined fine ores are introduced into the reactor vessel (9) which simultaneously forms a combustion chamber and a reduction vessel, the said ores being exposed in this reactor vessel to a first partial reduction by means of the reducing gas produced there and thereafter are introduced together with the reducing gas into the reactor loop (8) for further reduction.

4. Method as claimed in Claim 1 or 2, **characterised in that** additional combustion air and/or pure oxygen is introduced at at least one point (14) along the length of the reactor loop (8) and optionally of the upper heat exchanger stage (3, 4) for secondary combustion of the reducing gas.

5. Apparatus for the reduction of fine ores, comprising a multi-stage gas suspension preheater (I) with at least one upper heat exchanger stage (3, 4) for preheating and calcining fine ores (1) as well as at least one lower heat exchanger stage (2) which is constructed as a reduction stage for the preheated and calcined fine ores and to which the supply conduits (6, 7) for hot gas and reducing agent are connected, the heat exchanger stages (2, 3, 4) of the gas suspension preheater being connected to one another by gas and material conduits in such a way that fine ores delivered at the top pass downwards through this gas suspension preheater (I) generally in counter-current flow to the hot gases (5) which are delivered at the bottom,
**characterised in that**
for carrying out the principal reduction work the lowest heat exchanger stage (2) is constructed with a reactor loop (8) which is defined by an uptake conduit section (8a) and a curved upper section (8b) with which the reactor loop 8 opens into at least one precipitating cyclone (2a) of this heat exchanger stage which is disposed downstream, the hot gas supply (6) is connected to the lower end section of the uptake conduit section, and the uptake conduit section is also connected to a connecting conduit (7) for the supply of a hot reducing gas.

6. Apparatus as claimed in Claim 5, **characterised in that** for the production of the reducing gas a reactor vessel (9) is provided which is connected via the connecting conduit (7) to the reactor loop (8) and to which at least one fuel supply means (10) and at least one combustion air supply (11) are connected.

7. Apparatus as claimed in Claim 6, **characterised in that** the reactor vessel (9) is simultaneously constructed as a combustion chamber for the production of the hot reducing gas by sub-stoichiometric combustion of gaseous, liquid and/or solid fuels and as a reduction vessel for a first reducing treatment of the preheated and calcined fine ores (1).

8. Apparatus as claimed in Claim 7, **characterised in that** at least one burner (10) for sub-stoichiometric combustion of the fuels and fans for delivery of combustion air and optionally mixed gases are connected to the reactor vessel (9) and at least one feed pipe (12) is provided for preheated and calcined fine ores (1) and also optionally for fine coal.

9. Apparatus as claimed in Claim 5 and/or 7, **characterised in that** at least one supply connection (14) for supplying further combustion air and/or oxygen for the secondary combustion of reducing gas is connected to the reactor loop (8) and optionally to at least one rising gas conduit of the at least one upper heat exchanger stage (3, 4).

10. Apparatus as claimed in Claim 5, **characterised in that** - viewed in the flow direction of the fine ores (1) - an after-treatment kiln (III) for corrective or final reduction of the fine ores, preferably in the form of a rotary kiln (19) or at least one electric kiln, is disposed downstream of the reduction heat exchanger stage (2) of the gas suspension preheater (I).

## Revendications

1. Procédé pour réduire les fines de minerai (1), où des fines de minerai (1) préparées traversent de haut en bas, en général à contre-courant des gaz chauds remontants (5), un échangeur de chaleur par mise en suspension dans un gaz à plusieurs étages (I) et sont préchauffées et calcinées dans au moins un étage supérieur de l'échangeur de chaleur (3, 4) et sont ensuite exposées à un traitement thermique réducteur dans au moins un étage inférieur de l'échangeur de chaleur (2), avec addition d'un agent de réduction dans le courant de gaz chaud amené, **caractérisé en ce que** la partie principale du traitement thermique de réduction des fines de minerai calcinées et préchauffées, est réalisée dans une boucle du réacteur (8) formée dans l'étage le plus inférieur (2) de l'échangeur de chaleur par mise en suspension dans un gaz (I), où la boucle du réacteur dispose d'une section de conduite montante (8a) et d'une section courbe (8b) s'y raccordant, à partir de laquelle la boucle du réacteur débouche dans au moins un cyclone dépoussiéreur (2a) et en plus, un agent de réduction gazeux et chaud est envoyé dans le courant de gaz chaud montant.

2. Procédé selon la revendication 1, **caractérisé en ce que** l'agent de réduction gazeux et chaud est produit en tant que gaz de réduction dans un récipient de réacteur (9) séparé et rattaché à la boucle de réacteur (8), par une combustion sous-stoechiométrique de matériaux combustibles gazeux, liquides et/ou solides et envoyé à partir de là dans la boucle de réacteur (8).

3. Procédé selon la revendication 2 et/ou 3, **caractérisé en ce qu'**au moins une partie des fines de minerai calcinées et préchauffées est envoyée dans le récipient de réacteur (9) formant simultanément une chambre à combustion et un récipient de réduction, lesquelles sont exposées dans ce récipient de réacteur à une première réduction partielle à l'aide du gaz de réduction y produit et sont ensuite envoyées pour leur autre réduction, avec le gaz de réduction, dans la boucle de réacteur (8).

4. Procédé selon la revendication 1 ou 2, **caractérisé en ce qu'**en au moins un endroit (14) le long de la boucle de réacteur (8) et le cas échéant, à l'étage supérieur de l'échangeur de chaleur (3, 4), pour une postcombustion du gaz de réduction, de l'air de combustion supplémentaire et/ou de l'oxygène pur sont envoyés.

5. Installation pour réduire les fines de minerai, contenant un échangeur de chaleur par mise en suspension dans un gaz (I) avec au moins un étage supérieur de l'échangeur de chaleur (3, 4) pour le préchauffage et la calcination de fines de minerai (1), ainsi qu'au moins un étage inférieur de l'échangeur de chaleur (2) en tant qu'étape de réduction pour les fines de minerai préchauffées et calcinées, où sont joints des amenées (6,7) pour gaz chaud et agents de réduction, où les étages (2, 3, 4) des échangeurs de chaleur par mise en suspension dans un gaz à plusieurs étages (I) sont reliés entre eux par des conduites de gaz et de matières, de sorte que des fines minerai rajoutées d'en haut, traversent cet échangeur de chaleur par mise en suspension dans un gaz (I), de haut en bas en général à contre-courant des gaz chauds (5) rajoutés d'en bas remontant, **caractérisée en ce que** l'étage le plus inférieur de l'échangeur de chaleur (2) pour procéder au processus de réduction principal est muni d'une boucle de réacteur (8), qui est constituée d'une section de conduite montante (8a) et d'une section courbe supérieure (8b), par laquelle la boucle de réacteur débouche dans au moins un cyclone dépoussiéreur (2a) suivant cette étage de l'échangeur de chaleur et **en ce qu'**au niveau de l'extrémité inférieure de la section de conduite montante, est raccordée une amenée de gaz chaud (6), et la section de conduite montante est de plus en liaison avec le raccord de conduite (7) pour l'amenée d'un gaz de réduction chaud.

6. Installation selon la revendication 5, **caractérisée en ce que** pour la production du gaz de réduction un récipient de réacteur (9) est prévu, relié par le raccord de conduite (7) avec la boucle de réacteur (8) et où est raccordé au moins un dispositif d'amenée de matériau de combustion (10) et au moins une amenée d'air de combustion (11).

7. Installation selon la revendication 6, **caractérisée en ce que** le récipient de réacteur (9) se présente simultanément en tant que chambre à combustion pour produire un gaz de réduction chaud par une combustion sous-stoechiométrique de matériaux combustibles gazeux, liquides et/ou solides et en tant que récipient de réduction pour un premier traitement de réduction des fines de minerai (1) préchauffées et calcinées.

8. Installation selon la revendication 7, **caractérisée en ce qu'**au niveau du récipient de réacteur (9), est raccordé au moins un brûleur (10) pour la combustion sous-stoechiométrique des matières combustibles, et sont prévus des ventilateurs pour amener de l'air de combustion et le cas échéant, des gaz mixtes et est prévue au moins une buse (12) pour des fines de minerai préchauffées et calcinées ainsi que le cas échéant pour fines de charbon.

9. Installation selon la revendication 5 et/ou 7, **caractérisée en ce qu'**à la boucle de réacteur (8) est raccordée, et le cas échéant, à au moins une conduite de gaz montante d'au moins un étage supérieur de l'échangeur de chaleur (3, 4), au moins un raccord d'amenée (14) pour amener de l'air de combustion supplémentaire et/ou de l'oxygène pour une post-combustion du gaz de réduction.

10. Installation selon la revendication 5, **caractérisée en ce que** - vue en direction de l'écoulement des fines de minerai (1) - un four de posttraitement (III) pour la correction ou réduction finale des fines de minerai (1), de préférence sous forme d'un four tubulaire tournant (19) ou au moins d'un four électrique, est disposé au niveau de l'étage de réduction-échangeur de chaleur (2) de l'échangeur de chaleur par mise en suspension dans un gaz (I).
